# EUROPEAN PATENT APPLICATION

(11) **EP 3 235 864 A1**
(43) Date of publication of application: **25.10.2017**
(21) Application number: 15869732.6
(22) Date of filing: 19.11.2015
(51) Int. Cl.: C08L 23/00, C08G 63/16, C08K 3/00, C08L 67/02

(54) **POLYOLEFIN RESIN COMPOSITION**

(30) Priority: 19.12.2014 JP 2014257937
(71) Applicant: Adeka Corporation, Tokyo 116-0012 (JP)
(72) Inventor: NAKAMURA, Tatsuhito, Saitama-shi Saitama 336-0022 (JP); NOMURA, Kazukiyo, Saitama-shi Saitama 336-0022 (JP)
(74) Representative: Gill Jennings & Every LLP
(86) International application number: PCT/JP2015/082625
(87) International publication number: WO 2016/098524

(57) **Abstract**

Provided are: a polyolefin resin composition which has excellent antistatic properties with sufficient persistence and wiping resistance but without impairment of the intrinsic mechanical properties of a resin; and an automotive interior/exterior material containing the same. The polyolefin resin composition contains: 50 to 90 parts by mass of a polyolefin resin; 3 to 40 parts by mass of a thermoplastic elastomer; and 3 to 30 parts by mass of a filler, the polyolefin resin composition further containing an antistatic agent composed of a polymer compound (E) in an amount of 3 to 20 parts by mass with respect to a total amount of 100 parts by mass of the polyolefin resin, the thermoplastic elastomer and the filler, wherein the polymer compound (E) has a structure in which a diol, an aliphatic dicarboxylic acid, an aromatic dicarboxylic acid, a compound (B) which contains at least one group represented by the Formula (1) and has hydroxyl groups at both ends, and an epoxy compound (D) having two or more epoxy groups are bound via ester bonds:

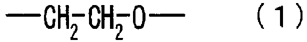

## Description

### TECHNICAL FIELD

The present invention relates to a polyolefin resin composition (hereinafter, also simply referred to as "resin composition"). More particularly, the present invention relates to a polyolefin resin composition which exhibits high antistatic performance as well as excellent persistence and wiping resistance of the antistatic performance and is suitable for the automotive interior and exterior applications.

### BACKGROUND ART

In recent years, polyolefin-based resin compositions comprising a polyolefin resin, a thermoplastic elastomer, a filler and the like have been used in automotive interior and exterior parts from the standpoints of weight reduction, cost reduction and various performance requirements such as moldability, rigidity and impact resistance.

However, polyolefin resins have a problem in that, because of their electrical insulation properties, they are easily electrically charged by friction and the like and attract dust and dirt in the surroundings, and this leads to deterioration of the outer appearance of their molded articles. In order to solve this problem, conventionally, an antistatic agent is incorporated into polyolefin resins (see Patent Documents 1 and 2). Further, polymer-type antistatic agents have been examined and, for example, the use of polyether ester amide has been proposed for the purpose of imparting antistaticity to polyolefin resins (see Patent Documents 3 and 4). Moreover, a block polymer characterized by having a structure in which polyolefin blocks and hydrophilic polymer blocks are repeatedly and alternately bound with each other has been proposed (see Patent Document 5).

### RELATED ART DOCUMENTS

### PATENT DOCUMENTS

Patent Document 1: Japanese Unexamined Patent Application Publication No. H11-323070
Patent Document 2: Japanese Unexamined Patent Application Publication No. H10-101865
Patent Document 3: Japanese Unexamined Patent Application Publication No. S58-118838
Patent Document 4: Japanese Unexamined Patent Application Publication No. H3-290464
Patent Document 5: Japanese Unexamined Patent Application Publication No.2001-278985

### SUMMARY OF THE INVENTION

### PROBLEMS TO BE SOLVED BY THE INVENTION

However, not only these conventional antistatic agents cannot demonstrate sufficient antistatic performance unless they are added to the subject resin in a large amount, but also their antistatic effects are not persistent enough. In addition, there is a problem that wiping of the surface of a molded article of the resin causes a reduction in the antistatic effect. Furthermore, since these antistatic agents cannot attain sufficient performance unless they are added to the resin in a large amount, there is also a problem that the addition adversely affects the intrinsic mechanical properties of the resin, such as bending modulus of elasticity, impact strength and thermal deformation temperature.

In view of the above, an object of the present invention is to provide a polyolefin resin composition which has excellent antistatic properties with sufficient persistence and wiping resistance but without impairment of the intrinsic mechanical properties of a resin. Another object of the present invention is to provide an automotive interior/exterior material comprising the polyolefin resin composition, which has intrinsic mechanical properties of a resin and whose commercial value is not likely to be reduced by surface contamination or dust adhesion caused by static electricity.

### MEANS FOR SOLVING THE PROBLEMS

The present inventors intensively studied to solve the above-described problems and discovered that the problems can be solved by incorporating a polymer compound having a specific structure into a polyolefin resin, thereby completing the present invention.

That is, the polyolefin resin composition of the present invention is characterized by comprising: 50 to 90 parts by mass of a polyolefin resin; 3 to 40 parts by mass of a thermoplastic elastomer; and 3 to 30 parts by mass of a filler (with a proviso that the total amount of the polyolefin resin, the thermoplastic elastomer and the filler is 100 parts by mass), the polyolefin resin composition further comprising an antistatic agent composed of a polymer compound (E) in an amount of 3 to 20 parts by mass with respect to the total amount of 100 parts by mass of the polyolefin resin, the thermoplastic elastomer and the filler, wherein the polymer compound (E) has a structure in which a diol, an aliphatic dicarboxylic acid, an aromatic dicarboxylic acid, a compound (B) which comprises at least one group represented by the following Formula (1) and has hydroxyl groups at both ends, and an epoxy compound (D) having two or more epoxy groups are bound via ester bonds:

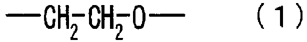

In the polyolefin resin composition of the present invention, it is preferred that the polymer compound (E) has a structure in which a polyester (A), which is constituted by a diol, an aliphatic dicarboxylic acid and an aromatic dicarboxylic acid, the compound (B) and the epoxy compound (D) are bound via ester bonds.

In the polyolefin resin composition of the present invention, it is also preferred that the polymer compound (E) has a structure in which a block polymer (C) having carboxyl groups at both ends and the epoxy compound (D) are bound via an ester bond, the block polymer (C) comprising a block constituted by the polyester (A) and a block constituted by the compound (B) that are repeatedly and alternately bound via ester bonds.

Further, in the polyolefin resin composition of the present invention, it is preferred that the polyester (A) constituting the polymer compound (E) has a structure comprising carboxyl groups at both ends. Still further, in the polyolefin resin composition of the present invention, it is preferred that, in said polymer compound (E), the block constituted by the polyester (A) has a number-average molecular weight of 800 to 8,000 in terms of polystyrene; the block constituted by the compound (B) has a number-average molecular weight of 400 to 6,000 in terms of polystyrene; and the block polymer (C) has a number-average molecular weight of 5,000 to 25,000 in terms of polystyrene.

Further, in the polyolefin resin composition of the present invention, it is preferred that the compound (B) constituting the polymer compound (E) be a polyethylene glycol. Still further, it is preferred that the polyolefin resin composition of the present invention further comprise at least one selected from the group consisting of alkali metal salts and Group II element salts in an amount of 0.1 to 15 parts by mass with respect to the total amount of 100 parts by mass of the polyolefin resin, the thermoplastic elastomer and the filler. Yet still further, in the polyolefin resin composition of the present invention, it is preferred that the polyolefin resin have a melt flow rate in a range of 5 to 100 g/10 min.

The automotive interior/exterior material of the present invention is characterized in that it is obtained by molding the above-described polyolefin resin composition.

### EFFECTS OF THE INVENTION

According to the present invention, a polyolefin resin composition which has intrinsic mechanical properties of a resin and exhibits high antistatic performance as well as excellent persistence and wiping resistance of the antistatic performance can be provided. In addition, according to the present invention, an automotive interior/exterior material comprising the polyolefin resin composition, whose commercial value is not likely to be reduced by surface contamination or dust adhesion caused by static electricity, can be provided.

### MODE FOR CARRYING OUT THE INVENTION

Embodiments of the present invention will now be described in detail.

### [Polyolefin Resin]

Examples of the polyolefin resin used in the present invention include *α*-olefin polymers such as low-density polyethylenes, linear low-density polyethylenes, high-density polyethylenes, isotactic polypropylenes, syndiotactic polypropylenes, hemi-isotactic polypropylenes, polybutenes, cycloolefin polymers, stereo block polypropylenes, poly-3-methyl-1-butene, poly-3-methyl-1-pentene and poly-4-methyl-1-pentene; *α*-olefin copolymers such as ethylene-propylene block or random copolymers, impact copolymer polypropylenes, ethylene-methyl methacrylate copolymers, ethylene-methyl acrylate copolymers, ethylene-ethyl acrylate copolymers, ethylene-butyl acrylate copolymers and ethylene-vinyl acetate copolymers, and the polyolefin resin may be a copolymer of two or more thereof. Further, two or more of these polyolefin resins may be used in combination, and the synthetic resins may be alloyed as well.

In the present invention, these polyolefin resins can be used regardless of the molecular weight, polymerization degree, density, softening point, ratio of solvent-insoluble component(s), degree of stereoregularity, presence or absence of catalyst residue, type and blend ratio of each material monomer, type of polymerization catalyst (e.g., a Ziegler catalyst or a metallocene catalyst) and the like.

From the standpoint of the mechanical properties such as the bending modulus of elasticity, impact strength and thermal deformation temperature of the resulting molded article, the polyolefin resin used in the present invention is preferably a polypropylene, a polypropylene copolymer or an ethylene-propylene copolymer, more preferably an ethylene-propylene block copolymer or an impact copolymer polypropylene.

From the standpoint of the mechanical properties of the resulting molded article, the polyolefin resin used in the present invention has a melt flow rate of preferably 5 to 100 g/10 min, more preferably 10 to 90 g/10 min, still more preferably 15 to 80 g/10 min.

### [Thermoplastic Elastomer]

The thermoplastic elastomer used in the present invention is a moldable elastomer which has rubber elasticity at normal temperature and exhibits fluidity when heated. The thermoplastic elastomer is not particularly restricted, and any known thermoplastic elastomer can be used. Examples the thermoplastic elastomer include polyolefin-based thermoplastic elastomers, polystyrene-based thermoplastic elastomers, polyvinyl chloride-based thermoplastic elastomers, polyester-based thermoplastic elastomers, polyamide-based thermoplastic elastomers and polyurethane-based thermoplastic elastomers and, thereamong, from the standpoint of the mechanical properties of the resulting molded article, polyolefin-based thermoplastic elastomers and polystyrene-based thermoplastic elastomers are preferred, and polyolefin-based thermoplastic elastomers are more preferred.

### [Filler]

As the filler used in the present invention, a known filter used in a polyolefin resin composition can be selected without any restriction. Examples of such a filler include talc, calcium carbonate, magnesium sulfate fibers, silica, clay, kaolin, alumina, carbon black and glass fibers and, thereamong, from the standpoint of the mechanical properties of the resulting molded article, talc is particularly preferred. Further, talc may be subjected to a treatment such as pulverization into powder or micronization into fine particles.

The blending ratios of the polyolefin resin, the thermoplastic elastomer and the filler are 50 to 90 parts by mass, 3 to 40 parts by mass and 3 to 30 parts by mass, respectively. It is noted here that the total amount of these polyolefin resin, the thermoplastic elastomer and the filler is 100 parts by mass. As the polyolefin resin, the thermoplastic elastomer and the filler, two or more polyolefin resins, thermoplastic elastomers and fillers may be used in combination, respectively.

From the standpoint of the mechanical properties such as bending modulus of elasticity, impact strength and thermal deformation temperature, the content of the polyolefin resin is preferably 55 to 80 parts by mass, that of the thermoplastic elastomer is preferably 5 to 35 parts by mass, and that of the filler is preferably 5 to 25 parts by mass.

### [Polymer Compound (E)]

Next, the polymer compound (E) used in the present invention will be described.

The polymer compound (E) is incorporated for the purpose of imparting antistaticity to the polyolefin resin composition of the present invention. The polymer compound (E) used in the present invention has a structure in which a diol, an aliphatic dicarboxylic acid, an aromatic dicarboxylic acid, a compound (B) which comprises at least one group represented by the following Formula (1) and has hydroxyl groups at both ends, and an epoxy compound (D) having two or more epoxy groups are bound via ester bonds:

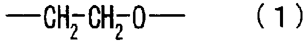

The polymer compound (E) can be obtained by allowing a diol, an aliphatic dicarboxylic acid, an aromatic dicarboxylic acid, a compound (B) which comprises at least one group represented by the Formula (1) and has hydroxyl groups at both ends, and an epoxy group (D) having two or more epoxy groups to undergo an esterification reaction.

First, the diol used in the present invention will be described.

Examples of the diol used in the present invention include aliphatic diols and aromatic group-containing diols. Two or more of these diols may be used in combination. Examples of the aliphatic diols include 1,2-ethanediol (ethylene glycol), 1,2-propanediol (propylene glycol), 1,3-propanediol, 1,2-butanediol, 1,3-butanediol, 2-methyl-1,3-propanediol, 1,4-butanediol, 1,5-pentanediol, 2,2-dimethyl-1,3-propanediol (neopentyl glycol), 2,2-diethyl-1,3-propanediol (3,3-dimethylolpentane), 2-*n*-butyl-2-ethyl-1,3-propanediol (3,3-dimethylol heptane), 3-methyl-1,5-pentanediol, 1,6-hexanediol, 2,2,4-trimethyl-1,3-pentanediol, 2-ethyl-1,3-hexanediol, 2-methyl-1,8-octanediol, 1,9-nonanediol, 1,10-decanediol, 1,12-octadecanediol, 1,4-cyclohexane dimethanol, hydrogenated bisphenol A, 1,2-, 1,3- or 1,4-cyclohexanediol, cyclododecanediol, dimer diol, hydrogenated dimer diol, diethylene glycol, dipropylene glycol, triethylene glycol and polyethylene glycol. Among these aliphatic diols, 1,4-cyclohexane dimethanol and hydrogenated bisphenol A are preferred because of their compatibility with polyolefin resins and antistatic properties, and 1,4-cyclohexane dimethanol is more preferred.

The aliphatic diols are preferably hydrophobic; therefore, among aliphatic diols, hydrophilic polyethylene glycols are not preferred. This, however, does not apply to those cases where they are used in combination with other diol.

Examples of the aromatic group-containing diols include polyhydroxyethyl adducts of mononuclear dihydric phenol compounds, such as bisphenol A, 1,2-hydroxybenzene, 1,3-hydroxybenzene, 1,4-hydroxybenzene, 1,4-benzenedimethanol, bisphenol A-ethylene oxide adducts, bisphenol A-propylene oxide adduct, 1,4-bis(2-hydroxyethoxy)benzene, resorcin and pyrocatechol. Among these aromatic group-containing diols, bisphenol A-ethylene oxide adducts and 1,4-bis(*β*-hydroxyethoxy)benzene are preferred.

Next, the aliphatic dicarboxylic acid used in the present invention will be described.

The aliphatic dicarboxylic acid used in the present invention may be a derivative (such as an acid anhydride, an alkyl ester, an alkali metal salt or an acid halide) of an aliphatic dicarboxylic acid. Further, two or more aliphatic dicarboxylic acids and derivatives thereof may be used in combination.

The aliphatic dicarboxylic acid is preferably, for example, an aliphatic dicarboxylic acid having 2 to 20 carbon atoms, examples of which include oxalic acid, malonic acid, succinic acid, glutaric acid, adipic acid, pimelic acid, suberic acid, azelaic acid, sebacic acid, 1,10-decanedicarboxylic acid, 1,4-cyclohexanedicarboxylic acid, dimer acid, maleic acid and fumaric acid. Among these aliphatic dicarboxylic acids, from the standpoints of the melting point and heat resistance, ones having 4 to 16 carbon atoms are preferred, and ones having 6 to 12 carbon atoms are more preferred.

Next, the aromatic dicarboxylic acid used in the present invention will be described.

The aromatic dicarboxylic acid used in the present invention may be a derivative (such as an acid anhydride, an alkyl ester, an alkali metal salt or an acid halide) of an aromatic dicarboxylic acid. Further, two or more aromatic dicarboxylic acids and derivatives thereof may be used in combination.

The aromatic dicarboxylic acid is preferably, for example, an aromatic dicarboxylic acid having 8 to 20 carbon atoms, examples of which include terephthalic acid, isophthalic acid, phthalic acid, phenylmalonic acid, homophthalic acid, phenylsuccinic acid, *β*-phenylglutaric acid, *α*-phenyladipic acid, *β*-phenyladipic acid, biphenyl-2,2'-dicarboxylic acid, biphenyl-4,4'-dicarboxylic acid, naphthalenedicarboxylic acid, sodium 3-sulfoisophthalate, and potassium 3-sulfoisophthalate.

Next, the compound (B) used in the present invention, which comprises at least one group represented by the following Formula (1) and has hydroxyl groups at both ends, will be described.

The compound (B) which comprises at least one group represented by the following Formula (1) and has hydroxyl groups at both ends is preferably a hydrophilic compound, more preferably a polyether having the group represented by the Formula (1), particularly preferably a polyethylene glycol represented by the following Formula (2):

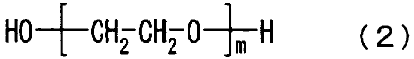

In the Formula (2), m represents a number of 5 to 250. From the standpoints of the heat resistance and compatibility, m is preferably 20 to 150.

Examples of the compound (B) include polyethylene glycols obtained by addition reaction of ethylene oxide; and polyethers obtained by addition reaction of ethylene oxide and at least one other alkylene oxide (e.g., propylene oxide, or 1,2-, 1,4-, 2,3- or 1,3-butylene oxide), which may be random or block polyethers.

Examples of the compound (B) also include compounds having a structure in which ethylene oxide is added to an active hydrogen atom-containing compound; and compounds having a structure in which ethylene oxide and at least one other alkylene oxide (e.g., propylene oxide, or 1,2-, 1,4-, 2,3- or 1,3-butylene oxide) are added. The addition in these compounds may be random or block addition.

The active hydrogen atom-containing compound is, for example, a glycol, a dihydric phenol, a primary monoamine, a secondary diamine or a dicarboxylic acid.

As the glycol, aliphatic glycols having 2 to 20 carbon atoms, alicyclic glycols having 5 to 12 carbon atoms and aromatic glycols having 8 to 26 carbon atoms can be used.

Examples of the aliphatic glycols include ethylene glycol, 1,2-propylene glycol, 1,3-propanediol, 1,2-butanediol, 1,3-butanediol, 1,4-butanediol, 1,3-hexanediol, 1,4-hexanediol, 1,6-hexanediol, 2,5-hexanediol, 1,2-octanediol, 1,8-octanediol, 1,10-decanediol, 1,18-octadecanediol, 1,20-eicosanediol, diethylene glycol, triethylene glycol and thiodiethylene glycol.

Examples of the alicyclic glycols include 1-hydroxymethyl-1-cyclobutanol, 1,2-cyclohexanediol, 1,3-cyclohexanediol, 1,4-cyclohexanediol, 1-methyl-3,4-cyclohexanediol, 2-hydroxymethylcyclohexanol, 4-hydroxymethylcyclohexanol, 1,4-cyclohexane dimethanol and 1,1'-dihydroxy-1,1'-dicyclohexanol.

Examples of the aromatic glycols include dihydroxymethylbenzene, 1,4-bis(*β*-hydroxyethoxy)benzene, 2-phenyl-1,3-propanediol, 2-phenyl-1,4-butanediol, 2-benzyl-1,3-propanediol, triphenylethylene glycol, tetraphenylethylene glycol and benzopinacol.

As the dihydric phenol, a phenol having 6 to 30 carbon atoms can be used, and examples thereof include catechol, resorcinol, 1,4-dihydroxybenzene, hydroquinone, bisphenol A, bisphenol F, bisphenol S, dihydroxydiphenyl ether, dihydroxydiphenyl thioether, binaphthol, and alkyl (C1 to C10) or halogen substitution products of these phenols.

Examples of the primary monoamine include aliphatic primary monoamines having 1 to 20 carbon atoms, such as methylamine, ethylamine, *n*-propylamine, isopropylamine, *n*-butylamine, *s*-butylamine, isobutylamine, *n*-pentylamine, isopentylamine, *n*-hexylamine, *n*-heptylamine, *n*-octylamine, *n*-decylamine, *n*-octadecylamine and *n*-eicosylamine.

Examples of the secondary diamine include aliphatic secondary diamines having 4 to 18 carbon atoms, heterocyclic secondary diamines having 4 to 13 carbon atoms, alicyclic secondary diamines having 6 to 14 carbon atoms, aromatic secondary diamines having 8 to 14 carbon atoms, and secondary alkanoldiamines having 3 to 22 carbon atoms.

Examples of the aliphatic secondary diamines include *N,N*'-dimethylethylenediamine, *N,N*'-diethylethylenediamine, *N,N*'-dibutylethylenediamine, *N,N*'-dimethylpropylenediamine, *N,N*'-diethylpropylenediamine, *N,N*'-dibutylpropylenediamine, *N,N*'-dimethyltetramethylenediamine, *N,N*'-diethyltetramethylenediamine, *N,N*'-dibutyltetramethylenediamine, *N,N*'-dimethylhexamethylenediamine, *N,N*'-diethylhexamethylenediamine, *N,N*'-dibutylhexamethylenediamine, *N,N*'-dimethyldecamethylenediamine, *N,N*'-diethyldecamethylenediamine and *N,N*'-dibutyldecamethylenediamine.

Examples of the heterocyclic secondary diamines include piperazine and 1-aminopiperidine.

Examples of the alicyclic secondary diamines include *N,N*'-dimethyl-1,2-cyclobutanediamine, *N,N*'-diethyl-1,2-cyclobutanediamine, *N,N*'-dibutyl-1,2-cyclobutanediamine, *N,N*'-dimethyl-1,4-cyclohexanediamine, *N,N*'-diethyl-1,4-cyclohexanediamine, *N,N*'-dibutyl-1,4-cyclohexanediamine, *N,N*'-dimethyl-1,3-cyclohexanediamine, *N,N*'-diethyl-1,3-cyclohexanediamine and *N,N*'-dibutyl-1,3-cyclohexanediamine.

Examples of the aromatic secondary diamines include *N,N*'-dimethyl-phenylenediamine, *N,N*'-dimethyl-xylylenediamine, *N,N*'-dimethyl-diphenylmethanediamine, *N,N*'-dimethyl-diphenyl ether diamine, *N,N*'-dimethyl-benzidine and *N,N*'-dimethyl-1,4-naphthalenediamine.

Examples of the secondary alkanoldiamines include *N*-methyldiethanolamine, *N*-octyldiethanolamine, *N*-stearyldiethanolamine and *N*-methyldipropanolamine.

Examples of the dicarboxylic acid include dicarboxylic acids having 2 to 20 carbon atoms, such as aliphatic dicarboxylic acids, aromatic dicarboxylic acids and alicyclic dicarboxylic acids.

Examples of the aliphatic dicarboxylic acids include oxalic acid, malonic acid, succinic acid, glutaric acid, methylsuccinic acid, dimethylmalonic acid, *β*-methylglutaric acid, ethylsuccinic acid, isopropylmalonic acid, adipic acid, pimelic acid, suberic acid, azelaic acid, sebacic acid, undecanedicarboxylic acid, dodecanedicarboxylic acid, tridecanedicarboxylic acid, tetradecanedicarboxylic acid, hexadecanedicarboxylic acid, octadecanedicarboxylic acid and eicosanedicarboxylic acid.

Examples of the aromatic dicarboxylic acids include terephthalic acid, isophthalic acid, phthalic acid, phenylmalonic acid, homophthalic acid, phenylsuccinic acid, *β*-phenylglutaric acid, *α*-phenyladipic acid, *β*-phenyladipic acid, biphenyl-2,2'-dicarboxylic acid, biphenyl-4,4'-dicarboxylic acid, naphthalenedicarboxylic acid, sodium 3-sulfoisophthalate, and potassium 3-sulfoisophthalate.

Examples of the alicyclic dicarboxylic acids include 1,3-cyclopentanedicarboxylic acid, 1,2-cyclopentanedicarboxylic acid, 1,4-cyclohexanedicarboxylic acid, 1,2-cyclohexanedicarboxylic acid, 1,3-cyclohexanedicarboxylic acid, 1,4-cyclohexanediacetic acid, 1,3-cyclohexanediacetic acid, 1,2-cyclohexanediacetic acid and dicyclohexyl-4,4'-dicarboxylic acid.

These active hydrogen atom-containing compounds may be used individually, or two or more thereof may be used in combination.

Next, the epoxy compound (D) having two or more epoxy groups used in the present invention will be described.

The epoxy compound (D) used in the present invention is not particularly restricted as long as it comprises two or more epoxy groups, and examples of such an epoxy compound include polyglycidyl ether compounds of mononuclear polyhydric phenol compounds, such as hydroquinone, resorcin, pyrocatechol and phloroglucinol; polyglycidyl ether compounds of polynuclear polyhydric phenol compounds, such as dihydroxynaphthalene, biphenol, methylene bisphenol (bisphenol F), methylene bis(ortho-cresol), ethylidene bisphenol, isopropylidene bisphenol (bisphenol A), isopropylidene bis(ortho-cresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfobisphenol, oxybisphenol, phenol novolac, o-cresol novolac, ethylphenol novolac, butylphenol novolac, octylphenol novolac, resorcin novolac and terpene phenol; polyglycidyl ethers of polyhydric alcohols, such as ethylene glycol, propylene glycol, butylene glycol, hexanediol, polyethylene glycol, polyglycol, thiodiglycol, glycerin, trimethylolpropane, pentaerythritol, sorbitol and bisphenol A-ethylene oxide adducts; homo- or co-polymers of glycidyl ester of an aliphatic, aromatic or alicyclic polybasic acid, such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid or endomethylene tetrahydrophthalic acid, and glycidyl methacrylate; glycidylamino group-containing epoxy compounds such as *N,N-*diglycidyl aniline, bis(4-(*N*-methyl-*N*-glycidylamino)phenyl)methane and diglycidyl ortho-toluidine; epoxidized cyclic olefin compounds such as vinylcyclohexene diepoxide, dicyclopentadiene diepoxide, 3,4-epoxycyclohexylmethyl-3,4-epoxycyclohexane carboxylate, 3,4-epoxy-6-methylcyclohexylmethyl-6-methylcyclohexane carboxylate and bis(3,4-epoxy-6-methylcyclohexylmethyl)adipate; epoxidized conjugated diene polymers such as epoxidized polybutadienes and epoxidized styrene-butadiene copolymers; heterocyclic compounds such as triglycidyl isocyanurate; and epoxidized soybean oil. These epoxy compounds may be internally cross-linked by a prepolymer of terminal isocyanate, or may be allowed to have a high molecular weight using a multivalent active hydrogen compound (e.g., a polyhydric phenol, a polyamine, a carbonyl group-containing compound or a polyphosphoric acid ester). As the epoxy compound (D), two or more of these epoxy compounds may be used in combination.

From the standpoints of the compatibility with polyolefin resins and the antistatic properties, it is preferred that the polymer compound (E) have a structure in which a polyester (A), which is constituted by a diol, an aliphatic dicarboxylic acid and an aromatic dicarboxylic acid, the compound (B) and the epoxy compound (D) are bound via ester bonds.

Further, from the standpoints of the compatibility with polyolefin resins and the antistatic properties, it is also preferred that the polymer compound (E) have a structure in which a block polymer (C) having carboxyl groups at both ends and the above-described epoxy compound (D) are bound via an ester bond, the block polymer (C) comprising a block constituted by the polyester (A), which is constituted by a diol, an aliphatic dicarboxylic acid and an aromatic dicarboxylic acid, and a block constituted by the compound (B) that are repeatedly and alternately bound via ester bonds.

The polyester (A) according to the present invention may be any polyester as long as it is composed of a diol, an aliphatic dicarboxylic acid and an aromatic dicarboxylic acid, and it is preferred that the polyester (A) have a structure in which a residue obtained by removing a hydroxyl group from the diol and a residue obtained by removing a carboxyl group from the aliphatic dicarboxylic acid are bound via an ester bond and the residue obtained by removing a hydroxyl group from the diol and a residue obtained by removing a carboxyl group from the aromatic dicarboxylic acid are bound via an ester bond.

It is also preferred that the polyester (A) have a structure comprising carboxyl groups at both ends. Further, the polymerization degree of the polyester (A) is preferably in a range of 2 to 50.

The polyester (A) having carboxyl groups at both ends can be obtained by, for example, allowing the above-described aliphatic dicarboxylic acid and the above-described aromatic dicarboxylic acid to undergo a polycondensation reaction with the above-described diol.

The aliphatic dicarboxylic acid may be a derivative (such as an acid anhydride, an alkyl ester, an alkali metal salt or an acid halide) of an aliphatic dicarboxylic acid. In cases where the polyester (A) is obtained using such a derivative, both ends of the polyester (A) can eventually be treated to be carboxyl groups, and the polyester (A) in this state may be directly subjected to the subsequent reaction for obtaining the block polymer (C) having a structure comprising carboxyl groups at both ends. Further, two or more aliphatic dicarboxylic acids and derivatives thereof may be used in combination.

The aromatic dicarboxylic acid may be a derivative (such as an acid anhydride, an alkyl ester, an alkali metal salt or an acid halide) of an aromatic dicarboxylic acid. In cases where the polyester is obtained using such a derivative, both ends of the polyester can eventually be treated to be carboxyl groups, and the polyester in this state may be directly subjected to the subsequent reaction for obtaining the block polymer (C) having a structure comprising carboxyl groups at both ends. Further, two or more aromatic dicarboxylic acids and derivatives thereof may be used in combination.

In the polyester (A), the molar ratio of a residue excluding the carboxyl groups of the aliphatic dicarboxylic acid and the residue excluding the carboxyl groups of the aromatic dicarboxylic acid is preferably 90:10 to 99.9:0.1, more preferably 93:7 to 99.9:0.1.

The polyester (A) having carboxyl groups at both ends can be obtained by, for example, allowing the above-described aliphatic dicarboxylic acid or derivative thereof and the above-described aromatic dicarboxylic acid or derivative thereof to undergo a polycondensation reaction with the above-described diol.

As for the reaction ratio of the aliphatic dicarboxylic acid or derivative thereof and the aromatic dicarboxylic acid or derivative thereof with respect to the diol, it is preferred that the aliphatic dicarboxylic acid or derivative thereof and the aromatic dicarboxylic acid or derivative thereof be used in an excess amount, particularly in an excess of 1 mole in terms of molar ratio with respect to the diol, such that the resulting polyester has carboxyl groups at both ends.

In the polycondensation reaction, the compounding ratio of the aliphatic dicarboxylic acid or derivative thereof and the aromatic dicarboxylic acid or derivative thereof is, in terms of molar ratio, preferably 90:10 to 99.9:0.1, more preferably 93:7 to 99.9:0.1.

Depending on the compounding ratio and the reaction conditions, a polyester consisting of only the diol and the aliphatic dicarboxylic acid and a polyester consisting of only the diol and the aromatic dicarboxylic acid may be generated; however, in the present invention, the polyester (A) may contain such polyesters, or the block polymer (C) may be obtained by directly allowing such polyesters to react with the component (B).

In the polycondensation reaction, a catalyst which promotes esterification reaction may be used and, as such a catalyst, a conventionally known catalyst such as dibutyl tin oxide, tetraalkyl titanate, zirconium acetate or zinc acetate can be employed.

In cases where a derivative such as a carboxylic acid ester, metal carboxylate or carboxylic acid halide is used in place of the dicarboxylic acid of the aliphatic dicarboxylic acid and the aromatic dicarboxylic acid, after the derivative and the diol are allowed to react with each other, both ends of the resultant may be treated to be dicarboxylic acids, or the resultant may be directly subjected to a reaction for obtaining the block polymer (C) having a structure comprising carboxyl groups at both ends.

A preferred polyester (A), which is composed of a diol, an aliphatic dicarboxylic acid and an aromatic dicarboxylic acid and has carboxyl groups at both ends, may be any polyester as long as it reacts with the component (B) to form an ester bond and thereby constitutes the structure of the block polymer (C), and the carboxyl groups at both ends may be protected or modified, or may be in a precursor form. Further, in order to inhibit oxidation of the product during the reaction, an antioxidant such as a phenolic antioxidant may also be added to the reaction system.

The compound (B) having hydroxyl groups at both ends may be any compound as long as it reacts with the component (A) to form an ester bond and thereby constitutes the structure of the block polymer (C). The hydroxyl groups at both ends may be protected or modified, or may be in a precursor form.

The block polymer (C) according to the present invention, which has a structure comprising carboxyl groups at both ends, contains a block constituted by the polyester (A) and a block constituted by the compound (B) and has a structure in which these blocks are repeatedly and alternately bound via ester bonds formed by carboxyl groups and hydroxyl groups. One example of the block polymer (C) is a block polymer having a structure represented by the following Formula (3):

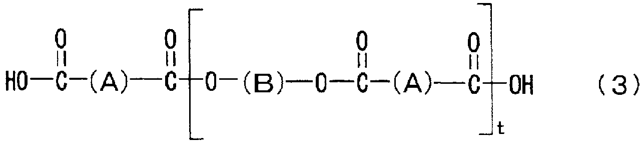

In the Formula (3), (A) represents a block constituted by the polyester (A) having carboxyl groups at both ends; (B) represents a block constituted by the compound (B) having hydroxyl groups at both ends; and t represents the number of repeating units, which is preferably 1 to 10, more preferably 1 to 7, most preferably 1 to 5.

In the block polymer (C), the block constituted by the polyester (A) may be partially replaced with a block constituted by a polyester consisting of only a diol and an aliphatic dicarboxylic acid or a block constituted by a polyester consisting of only a diol and an aromatic dicarboxylic acid.

The block polymer (C) having a structure comprising carboxyl groups at both ends can be obtained by allowing the polyester (A) having carboxyl groups at both ends and the compound (B) having hydroxyl groups at both ends to undergo a polycondensation reaction; however, as long as the block polymer (C) has a structure that is equivalent to the one in which the polyester (A) and the compound (B) are repeatedly and alternately bound via ester bonds formed by carboxyl groups and hydroxyl groups, it is not necessarily required that the block polymer (C) be synthesized from the polyester (A) and the compound (B).

As for the reaction ratio between the polyester (A) and the compound (B), by adjusting the amount of the polyester (A) to be (X + 1) mol with respect to X mol of the compound (B), the block polymer (C) having carboxyl groups at both ends can be preferably obtained.

As for the reaction, after the completion of the synthesis reaction of the polyester (A), without the thus synthesized polyester (A) being isolated, the compound (B) may be added to the reaction system and allowed to react with the polyester (A) as is.

In the polycondensation reaction, a catalyst which promotes esterification reaction may be used and, as such a catalyst, a conventionally known catalyst such as dibutyl tin oxide, tetraalkyl titanate, zirconium acetate or zinc acetate can be employed. Further, in order to inhibit oxidation of the product during the reaction, an antioxidant such as a phenolic antioxidant may also be added to the reaction system.

Further, the polyester (A) may contain a polyester consisting of only a diol and an aliphatic dicarboxylic acid and/or a polyester consisting of only a diol and an aromatic dicarboxylic acid, and these polyesters may be directly allowed to react with the compound (B) to obtain the block polymer (C).

In addition to the block constituted by the polyester (A) and the block constituted by the compound (B), the block polymer (C) may also contain, in its structure, a block constituted by a polyester consisting of only a diol and an aliphatic dicarboxylic acid and/or a block constituted by a polyester consisting of only a diol and an aromatic dicarboxylic acid.

It is preferred that the polymer compound (E) according to the present invention have a structure in which the block polymer (C) having a structure comprising carboxyl groups at both ends and the epoxy compound (D) having two or more epoxy groups are bound via an ester bond formed by a terminal carboxyl group of the block polymer (C) and an epoxy group of the epoxy compound (D). The polymer compound (E) may further comprise an ester bond formed by a carboxyl group of the polyester (A) and an epoxy group of the epoxy compound (D).

In order to obtain the polymer compound (E), the carboxyl groups of the block polymer (C) and the epoxy groups of the epoxy compound (D) can be allowed to react with each other. The number of the epoxy groups of the epoxy compound is preferably 0.5 to 5 equivalents, more preferably 0.5 to 1.5 equivalents, with respect to the number of the carboxyl groups of the block polymer (C) to be reacted. Further, the reaction can be performed in a variety of solvents, or it may be performed in a molten state.

The amount of the epoxy compound (D) having two or more epoxy groups to be used in the reaction is preferably 0.1 to 2.0 equivalents, more preferably 0.2 to 1.5 equivalents, with respect to the number of the carboxyl groups of the block polymer (C) to be reacted.

As for the reaction, after the completion of the synthesis reaction of the block polymer (C), without the thus synthesized block polymer (C) being isolated, the epoxy compound (D) may be added to the reaction system and allowed to react with the block polymer (C) as is. In this case, unreacted carboxyl groups of the polyester (A) used in an excess amount in the synthesis of the block polymer (C) may react with some of the epoxy groups of the epoxy compound (D) to form ester bonds.

It is not necessarily required that a preferred polymer compound (E) of the present invention be synthesized from the block polymer (C) and the epoxy compound (D), as long as the polymer compound (E) has a structure that is equivalent to the one in which the block polymer (C) having a structure comprising carboxyl groups at both ends and the epoxy compound (D) having two or more epoxy groups are bound via an ester bond formed by a carboxyl group of the block polymer (C) and an epoxy group of the epoxy compound (D).

In the polymer compound (E) of the present invention, the block constituted by the polyester (A) has a number-average molecular weight of preferably 800 to 8,000, more preferably 1,000 to 6,000, still more preferably 2,000 to 4,000, in terms of polystyrene. In the polymer compound (E), the block constituted by the compound (B) having hydroxyl groups at both ends has a number-average molecular weight of preferably 400 to 6,000, more preferably 1,000 to 5,000, still more preferably 2,000 to 4,000, in terms of polystyrene. Further, in the polymer compound (E), the block constituted by the block polymer (C) having a structure comprising carboxyl groups at both ends has a number-average molecular weight of preferably 5,000 to 25,000, more preferably 7,000 to 17,000, still more preferably 9,000 to 13,000, in terms of polystyrene.

Further, the polymer compound (E) of the present invention may be obtained by preparing the polyester (A) from a diol, an aliphatic dicarboxylic acid and an aromatic dicarboxylic acid and then allowing the polyester (A) to react with the compound (B) and/or the epoxy compound (D) without isolating the polyester (A).

In the present invention, the polymer compound (E) is incorporated in an amount of 3 to 20 parts by mass with respect to the total amount of 100 parts by mass of the above-described polyolefin resin, thermoplastic elastomer and filler and, from the standpoints of the antistaticity and the mechanical properties such as bending modulus of elasticity, impact strength and thermal deformation temperature, the amount is preferably 5 to 18 parts by mass, more preferably 7 to 15 parts by mass. When the amount is less than 3 parts by mass, sufficient antistaticity cannot be attained, whereas an amount of greater than 20 parts by mass adversely affects the mechanical properties.

In the polyolefin resin composition of the present invention, for an improvement of the antistatic performance, it is also preferred to incorporate at least one selected from the group consisting of alkali metal salts and Group II element salts.

Examples of the alkali metal salts and Group II element salts include those of organic acids and inorganic acids. Examples of the alkali metal include lithium, sodium, potassium, cesium and rubidium, and examples of the Group II element include beryllium, magnesium, calcium, strontium and barium. Further, examples of the organic acids include aliphatic monocarboxylic acids having 1 to 18 carbon atoms, such as formic acid, acetic acid, propionic acid, butyric acid and lactic acid; aliphatic dicarboxylic acids having 1 to 12 carbon atoms, such as oxalic acid, malonic acid, succinic acid, fumaric acid, maleic acid and adipic acid; aromatic carboxylic acids, such as benzoic acid, phthalic acid, isophthalic acid, terephthalic acid and salicylic acid; and sulfonic acids having 1 to 20 carbon atoms, such as methanesulfonic acid, *p*-toluenesulfonic acid, dodecylbenzenesulfonic acid and trifluoromethanesulfonic acid, and examples of the inorganic acids include hydrochloric acid, hydrobromic acid, sulfuric acid, sulfurous acid, phosphoric acid, phosphorous acid, polyphosphoric acid, nitric acid and perchloric acid. Thereamong, from the standpoint of antistatic properties, alkali metal salts are preferred, salts of lithium, sodium and potassium are more preferred, and salts of lithium are most preferred. Further, from the standpoint of antistatic properties, acetates, perchlorates, *p*-toluenesulfonates and dodecylbenzenesulfonates are preferred.

Specific examples of the alkali metal salts and Group II element salts include lithium acetate, sodium acetate, potassium acetate, lithium chloride, sodium chloride, potassium chloride, magnesium chloride, calcium chloride, lithium phosphate, sodium phosphate, potassium phosphate, lithium sulfate, sodium sulfate, magnesium sulfate, calcium sulfate, lithium perchlorate, sodium perchlorate, potassium perchlorate, lithium *p*-toluenesulfonate, sodium *p*-toluenesulfonate, potassium *p*-toluenesulfonate, lithium dodecylbenzenesulfonate, sodium dodecylbenzenesulfonate and potassium dodecylbenzenesulfonate. Thereamong, for example, lithium acetate, potassium acetate, lithium *p*-toluenesulfonate, sodium *p*-toluenesulfonate and lithium chloride are preferred.

The amount of the alkali metal salt(s) and/or Group II metal salt(s) to be incorporated is, from the standpoints of the antistaticity and the mechanical properties such as bending modulus of elasticity, impact strength and thermal deformation temperature, preferably 0.1 to 15 parts by mass, more preferably 0.5 to 10 parts by mass, still more preferably 1 to 5 parts by mass, with respect to the total amount of 100 parts by mass of the polyolefin resin, thermoplastic elastomer and filler.

Further, a surfactant may also be incorporated into the polyolefin resin composition of the present invention. As the surfactant, a nonionic, anionic, cationic or amphoteric surfactant can be employed. Examples of the nonionic surfactant include polyethylene glycol-type nonionic surfactants, such as higher alcohol ethylene oxide adducts, fatty acid ethylene oxide adducts, higher alkylamine ethylene oxide adducts and polypropylene glycol ethylene oxide adducts; and polyhydric alcohol-type nonionic surfactants, such as polyethylene oxides, glycerin fatty acid esters, pentaerythritol fatty acid esters, fatty acid esters of sorbitol or sorbitan, polyhydric alcohol alkyl ethers and alkanolamine aliphatic amides, and examples of the anionic surfactant include carboxylates such as alkali metal salts of higher fatty acids; sulfates such as higher alcohol sulfates and higher alkyl ether sulfates; sulfonates such as alkylbenzenesulfonates, alkylsulfonates and paraffin sulfonates; and phosphates such as higher alcohol phosphates. Examples of the cationic surfactant include quaternary ammonium salts such as alkyltrimethylammonium salts, and examples of the amphoteric surfactant include amino acid-type amphoteric surfactants such as higher alkylaminopropionates; and betaine-type amphoteric surfactants such as higher alkyl dimethylbetaines and higher alkyl dihydroxyethylbetaines. These surfactants may be used individually, or two or more thereof may be used in combination. In the present invention, among the above-described surfactants, anionic surfactants are preferred, and sulfonates such as alkylbenzenesulfonates, alkylsulfonates and paraffin sulfonates are particularly preferred.

The amount of the surfactant(s) to be incorporated is preferably 0.1 to 10 parts by mass, more preferably 0.5 to 5 parts by mass, with respect to the total amount of 100 parts by mass of the above-described polyolefin resin, thermoplastic elastomer and filler.

Further, the other polymer-type antistatic agent may also be incorporated into the polyolefin resin composition of the present invention. As the polymer-type antistatic agent, for example, a known polymer-type antistatic agent such as a polyether ester amide can be used, and examples thereof include the polyether ester amide disclosed in Japanese Unexamined Patent Application Publication No. H7-10989 which comprises a polyoxyalkylene adduct of bisphenol A. Further, a block polymer having 2 to 50 repeating structures each composed of a polyolefin block and a hydrophilic polymer block can also be used, and examples thereof include the block polymer disclosed in the specification of U.S. Patent No. 6552131.

The amount of the polymer-type antistatic agent to be incorporated is preferably 0.1 to 10 parts by mass, more preferably 0.5 to 5 parts by mass, with respect to the total amount of 100 parts by mass of the above-described polyolefin resin, thermoplastic elastomer and filler.

Still further, the polyolefin resin composition of the present invention may also be blended with an ionic liquid. The ionic liquid is, for example, a normal temperature-molten salt having a melting point of not higher than room temperature and an initial electrical conductivity of 1 to 200 ms/cm, preferably 10 to 200 ms/cm, in which at least one cation or anion constituting the ionic liquid is an organic ion. Examples of such a normal temperature-molten salt include the one disclosed in WO 95/15572.

The cation constituting the ionic liquid is, for example, one selected from the group consisting of amidinium, pyridinium, pyrazolium and guanidinium cations.

Thereamong, examples of the amidinium cation include the followings:
(1) imidazolinium cations
   those having 5 to 15 carbon atoms, such as 1,2,3,4-tetramethylimidazolinium and 1,3-dimethylimidazolinium;
(2) imidazolium cations
   those having 5 to 15 carbon atoms, such as 1,3-dimethylimidazolium and 1-ethyl-3-methylimidazolium;
(3) tetrahydropyrimidinium cations
   those having 6 to 15 carbon atoms, such as
   1,3-dimethyl-1,4,5,6-tetrahydropyrimidinium and
   1,2,3,4-tetramethyl-1,4,5,6-tetrahydropyrimidinium; and
(4) dihydropyrimidinium cations
   those having 6 to 20 carbon atoms, such as 1,3-dimethyl-1,4-dihydropyrimidinium, 1,3-dimethyl-1,6-dihydropyrimidinium, 8-methyl-1,8-diazabicyclo[5,4,0]-7,9-undecadienium and 8-methyl-1,8-diazabicyclo[5,4,0]-7,10-undecadienium.

Examples of the pyridinium cation include those having 6 to 20 carbon atoms, such as 3-methyl-1-propylpyridinium and 1-butyl-3,4-dimethylpyridinium.

Examples of the pyrazolium cation include those having 5 to 15 carbon atoms, such as 1,2-dimethylpyrazolium and 1-*n*-butyl-2-methylpyrazolium.

Examples of the guanidinium cation include the followings:
(1) guanidinium cations having an imidazolinium skeleton
   those having 8 to 15 carbon atoms, such as
   2-dimethylamino-1,3,4-trimethylimidazolinium and
   2-diethylamino-1,3,4-trimethylimidazolinium;
(2) guanidinium cations having an imidazolium skeleton
   those having 8 to 15 carbon atoms, such as
   2-dimethylamino-1,3,4-trimethylimidazolium and
   2-diethylamino-1,3,4-trimethylimidazolium;
(3) guanidinium cations having a tetrahydropyrimidinium skeleton
   those having 10 to 20 carbon atoms, such as
   2-dimethylamino-1,3,4-trimethyl-1,4,5,6-tetrahydropyrimidinium and 2-diethylamino-1,3-dimethyl-4-ethyl-1,4,5,6-tetrahydropyrimidinium; and
(4) guanidinium cations having a dihydropyrimidinium skeleton
   those having 10 to 20 carbon atoms, such as
   2-dimethylamino-1,3,4-trimethyl-1,4-dihydropyrimidinium, 2-dimethylamino-1,3,4-trimethyl-1,6-dihydropyrimidinium, 2-diethylamino-1,3-dimethyl-4-ethyl-1,4-dihydropyrimidinium and 2-diethylamino-1,3-dimethyl-4-ethyl-1,6-dihydropyrimidinium.

The above-described cations may be used individually, or two or more thereof may be used in combination. Thereamong, from the standpoint of antistatic properties, amidinium cations are preferred, imidazolium cations are more preferred, and 1-ethyl-3-methylimidazolium cation is particularly preferred.

In the ionic liquid, examples of the organic or inorganic acid constituting the anion include the followings. Examples of the organic acid include carboxylic acid, sulfuric acid ester, sulfonic acid and phosphoric acid ester, and examples of the inorganic acid include superacids (such as fluoroboric acid, tetrafluoroboric acid, perchloric acid, hexafluorophosphoric acid, hexafluoroantimonic acid and hexafluoroarsenic acid), phosphoric acid and boric acid. These organic and inorganic acids may be used individually, or two or more thereof may be used in combination.

Among these organic and inorganic acids, from the standpoint of the antistatic properties of the ionic liquid, acids forming a conjugate base of superacid or an anion other than a conjugate base of super acid, which allow the anion constituting the ionic liquid to have a Hammett acidity function (-H₀) of 12 to 100, and mixtures of such acids are preferred.

Examples of the anion other than a conjugate base of superacid include halogen (such as fluorine, chlorine and bromine) ions, alkyl (C1-12) benzenesulfonic acid (such as *p*-toluenesulfonic acid and dodecylbenzenesulfonic acid) ions, and poly (n = 1 to 25) fluoroalkanesulfonic acid (such as undecafluoropentanesulfonic acid) ions.

Examples of the superacid include those derived from a protonic acid or a combination of a protonic acid and a Lewis acid, and mixtures thereof. Examples of the protonic acid used as the superacid include bis(trifluoromethylsulfonyl)imidic acid, bis(pentafluoroethylsulfonyl)imidic acid, tris(trifluoromethylsulfonyl)methane, perchloric acid, fluorosulfonic acid, alkane (C1 to C30) sulfonic acids (such as methanesulfonic acid and dodecanesulfonic acid), poly (n = 1 to 30) fluoroalkane (C1 to C30) sulfonic acid (such as trifluoromethanesulfonic acid, pentafluoroethanesulfonic acid, heptafluoropropanesulfonic acid, nonafluorobutanesulfonic acid, undecafluoropentanesulfonic acid and tridecafluorohexanesulfonic acid), fluoroboric acid and tetrafluoroboric acid. Thereamong, from the standpoint of the ease of synthesis, fluoroboric acid, trifluoromethanesulfonic acid, bis(trifluoromethanesulfonyl)imidic acid and bis(pentafluoroethylsulfonyl)imidic acid are preferred.

Examples of the protonic acid used in combination with a Lewis acid include hydrogen halides (such as hydrogen fluoride, hydrogen chloride, hydrogen bromide and hydrogen iodide), perchloric acid, fluorosulfonic acid, methanesulfonic acid, trifluoromethanesulfonic acid, pentafluoroethanesulfonic acid, nonafluorobutanesulfonic acid, undecafluoropentanesulfonic acid, tridecafluorohexanesulfonic acid, and mixtures thereof. Thereamong, from the standpoint of the initial electrical conductivity of the ionic liquid, hydrogen fluoride is preferred.

Examples of the Lewis acid include boron trifluoride, phosphorus pentafluoride, antimony pentafluoride, arsenic pentafluoride, tantalum pentafluoride, and mixtures thereof. Thereamong, from the standpoint of the initial electrical conductivity of the ionic liquid, boron trifluoride and phosphorus pentafluoride are preferred.

The combination of a protonic acid and a Lewis acid may be any combination, and examples of a superacid derived therefrom include tetrafluoroboric acid, hexafluorophosphoric acid, hexafluorotantalic acid, hexafluoroantimonic acid, hexafluorotantalum sulfonic acid, tetrafluoroboric acid, hexafluorophosphoric acid, chlorotrifluoroboric acid, hexafluoroarsenic acid, and mixtures thereof.

Among the above-described anions, from the standpoint of the antistatic properties of the ionic liquid, conjugate bases of superacids (superacids derived from a protonic acid and superacids derived from a combination of a protonic acid and a Lewis acid) are preferred, and superacids derived from a protonic acid and conjugate bases of superacids derived from a protonic acid, boron trifluoride and/or phosphorus pentafluoride are more preferred.

Among the above-described ionic liquids, from the standpoint of the antistatic properties, amidinium cation-containing ionic liquids are preferred, 1-ethyl-3-methylimidazolium cation-containing ionic liquids are more preferred, and 1-ethyl-3-methylimidazolium-bis(trifluoromethanesulfonyl)imide is particularly preferred.

The amount of the ionic liquid to be blended is preferably 0.01 to 5 parts by mass, more preferably 0.1 to 3 parts by mass, with respect to the total amount of 100 parts by mass of the above-described polyolefin resin, thermoplastic elastomer and filler.

Yet still further, a compatibilizer may also be incorporated into the polyolefin resin composition of the present invention. By incorporating a compatibilizer, the compatibility of the antistatic component with other components and a resin component can be improved. Examples of such a compatibilizer include modified vinyl polymers having at least one functional group (polar group) selected from the group consisting of a carboxyl group, an epoxy group, an amino group, a hydroxyl group and a polyoxyalkylene group, such as the polymer disclosed in Japanese Unexamined Patent Application Publication No. H3-258850, the sulfonyl group-containing modified vinyl polymer disclosed in Japanese Unexamined Patent Application Publication No. H6-345927 and block polymers comprising a polyolefin moiety and an aromatic vinyl polymer moiety.

The amount of the compatibilizer to be incorporated is preferably 0.01 to 5 parts by mass, more preferably 0.1 to 3 parts by mass, with respect to the total amount of 100 parts by mass of the above-described polyolefin resin, thermoplastic elastomer and filler.

The polyolefin resin composition of the present invention can each be incorporated into the other thermoplastic resin than the polyolefin resin and the thermoplastic elastomer used in the present invention in such a range that does not impair the effects of the present invention. Examples of the other thermoplastic resin include halogen-containing resins, such as polyvinyl chloride, polyvinylidene chloride, chlorinated polyethylene, chlorinated polypropylene, polyvinylidene fluoride, chlorinated rubbers, vinyl chloride-vinyl acetate copolymers, vinyl chloride-ethylene copolymers, vinyl chloride-vinylidene chloride copolymers, vinyl chloride-vinylidene chloride-vinyl acetate ternary copolymers, vinyl chloride-acrylate copolymers, vinyl chloride-maleate copolymers and vinyl chloride-cyclohexylmaleimide copolymers; petroleum resins; coumarone resins; polystyrene; polyvinyl acetate; acrylic resins; copolymers (e.g., AS resins, ABS resins, ACS resins, SBS resins, MBS resins and heat-resistant ABS resins) composed of styrene and/or *α*-methylstyrene with other monomer (e.g., maleic anhydride, phenylmaleimide, methyl methacrylate, butadiene or acrylonitrile); polymethyl methacrylates; polyvinyl alcohols; polyvinyl formals; polyvinyl butyrals; aromatic polyesters including polyalkylene terephthalates, such as polyethylene terephthalate, polybutylene terephthalate and polycyclohexane dimethylene terephthalate, and polyalkylene naphthalates such as polyethylene naphthalate and polybutylene naphthalate, and linear polyesters such as polytetramethylene terephthalate; degradable aliphatic polyesters such as polyhydroxy butyrate, polycaprolactone, polybutylene succinate, polyethylene succinate, polylactic acid, polymalic acid, polyglycolic acid, polydioxane and poly(2-oxetanone); and thermoplastic resins and blends thereof, such as polyamides (e.g., polyphenylene oxide, polycaprolactam and polyhexamethylene adipamide), polycarbonates, polycarbonate/ABS resins, branched polycarbonates, polyacetals, polyphenylene sulfides, polyurethanes, cellulose-based resins, polyimide resins, polysulfones, polyphenylene ethers, polyether ketones, polyether ether ketones and liquid crystal polymers. Further, examples of the thermoplastic resin also include an isoprene rubber, a butadiene rubber, an acrylonitrile-butadiene copolymer rubber, a styrene-butadiene copolymer rubber, a fluorine rubber and a silicone rubber. These thermoplastic resins may be used individually, or two or more thereof may be used in combination. Moreover, these thermoplastic resins may be alloyed as well.

The method of producing the polyolefin resin composition of the presen invention is not particularly restricted, and the polyolefin resin composition can be produdced by incorporating the filler, the polymer compound (E) and the other arbitary component into the resin component. As the method of incorporating any commonly used method can be employed. For example, the polymer compound (E) can be mixed and kneaded into the thermoplastic resin by roll kneading or bumper kneading, or using an extruder or a kneader. Further, the polymer compound (E) may be directly added; however, as required, the polymer compound (E) may be impregnated into a carrier before the addition. In order to impregnate the polymer compound (E) into a carrier, the polymer compound (E) and the carrier can be directly heat-mixed, or a method in which the polymer compound (E) is diluted with an organic solvent before being impregnated into the carrier and the solvent is subsequently removed can be employed as required. As the carrier, one which is known as a filler or bulking agent of a synthetic resin, or a flame retardant or light stabilizer that is solid at normal temperature can be employed, and examples of such a carrier include calcium silicate powder, silica powder, talc powder, alumina powder, titanium oxide powder, and these carriers having chemically modified surface, as well as the below-described flame retardants and antioxidants that are solid. Thereamong, those carriers having chemically modified surface are preferred, and silica powder having chemically modified surface is more preferred. These carriers have an average particle size of preferably 0.1 to 100 µm, more preferably 0.5 to 50 µm.

As the method of incorporating the polymer compound (E) into a resin component, the polymer compound (E) may be synthesized by kneading the block polymer (C) and the epoxy compound (D) simultaneously with the polyolefin resin and the thermoplastic elastomer. Alternatively, the polymer compound (E) may be incorporated using a method of obtaining a molded article by mixing the polymer compound (E) and the resin at the time of molding such as injection molding, or a masterbatch of the polymer compound (E) and the polyolefin resin and/or the thermoplastic elastomer, which has been produced in advance, may be incorporated.

To the polyolefin resin composition of the present invention, as required, a variety of additives such as a phenolic antioxidant, a phosphorus-based antioxidant, a thioether-based antioxidant, an ultraviolet absorber and a hindered amine-based light stabilizer may also be added. By this, the resin composition of the present invention can be stabilized.

Examples of the phenolic antioxidants include 2,6-di-*tert*-butyl-*p*-cresol, 2,6-diphenyl-4-octadecyloxyphenol, distearyl(3,5-di-*tert*-butyl-4-hydroxybenzyl)phosphonate, 1,6-hexamethylene-bis[(3,5-di-*tert*-butyl-4-hydroxyphenyl)propionic acid amide], 4,4'-thiobis(6-*tert*-butyl-*m*-cresol), 2,2'-methylene-bis(4-methyl-6-*tert*-butylphenol), 2,2'-methylene-bis(4-ethyl-6-*tert*-butylphenol), 4,4'-butylidene-bis(6-*tert*-butyl-*m*-cresol), 2,2'-ethylidene-bis(4,6-di-*tert*-butylphenol), 2,2'-ethylidene-bis(4-*sec*-butyl-6-*tert*-butylphenol), 1,1,3-tris(2-methyl-4-hydroxy-5-*tert*-butylphenyl)butane, 1,3,5-tris(2,6-dimethyl-3-hydroxy-4-*tert*-butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimethylbenzene, 2-*tert*-butyl-4-methyl-6-(2-acryloyloxy-3-*tert*-butyl-5-methylbenzyl)phenol, stearyl(3,5-di-*tert*-butyl-4-hydroxyphenyl)propionate, tetrakis[3-(3,5-di-*tert*-butyl-4-hydroxyphenyl)propionic acid methyl]methane, thiodiethylene glycol-bis [(3,5-di-*tert*-butyl-4-hydroxyphenyl)propionate], 1,6-hexamethylene-bis[(3,5-di-*tert*-butyl-4-hydroxyphenyl)propionate], bis[3,3-bis(4-hydroxy-3-*tert*-butylphenyl)butyric acid]glycol ester, bis [2-*tert*-butyl-4-methyl-6-(2-hydroxy-3-*tert*-butyl-5-methylbenzyl)phenyl]terephthalate, 1,3,5-tris[(3,5-di-*tert*-butyl-4-hydroxyphenyl)propionyloxyethyl]isocyanurate, 3,9-bis[1,1-dimethyl-2-{(3-*tert*-butyl-4-hydroxy-5-methylphenyl)propionyloxy}ethyl]-2,4,8,1 0-tetraoxaspiro[5,5]undecane, and triethylene glycol-bis[(3-*tert*-butyl-4-hydroxy-5-methylphenyl)propionate]. These phenolic antioxidants are added in an amount of preferably 0.001 to 10 parts by mass, more preferably 0.05 to 5 parts by mass, with respect to the total amount of 100 parts by mass of the polyolefin resin, thermoplastic elastomer and filler.

Examples of the phosphorus-based antioxidants include trisnonylphenyl phosphite, tris[2-*tert*-butyl-4-(3-*tert*-butyl-4-hydroxy-5-methylphenylthio)-5-methylphenyl]phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-*tert*-butylphenyl)pentaerythritol diphosphite, bis(2,6-di-*tert*-butyl-4-methylphenyl)pentaerythritol diphosphite, bis(2,4,6-tri-*tert*-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-*n*-butylidene-bis(2-*tert*-butyl-5-methylphenol)diphosphite, hexa(tridecyl)-1,1,3-tris(2-methyl-4-hydroxy-5-*tert*-butylphenyl)butane triphosphite, tetrakis(2,4-di-*tert*-butylphenyl)biphenylene diphosphonite, 9,10-dihydro-9-oxa-10-phosphaphenanthrene-10-oxide, 2,2'-methylene-bis(4,6-*tert*-butylphenyl)-2-ethylhexyl phosphite, 2,2'-methylene-bis(4,6-*tert*-butylphenyl)-octadecyl phosphite, 2,2'-ethylidene-bis(4,6-di-*tert*-butylphenyl)fluorophosphite, tris(2-[(2,4,8,10-tetrakis-*tert*-butyldibenzo[d,f][1,3,2]dioxaphosphepin-6-yl)oxy]ethyl)amine, and phosphite of 2-ethyl-2-butylpropylene glycol and 2,4,6-tri-*tert*-butylphenol. These phosphorus-based antioxidants are added in an amount of preferably 0.001 to 10 parts by mass, more preferably 0.05 to 5 parts by mass, with respect to the total amount of 100 parts by mass of the polyolefin resin, thermoplastic elastomer and filler.

Examples of the thioether-based antioxidants include dialkyl thiodipropionates such as dilauryl thiodipropionate, dimyristyl thiodipropionate and distearyl thiodipropionate; and pentaerythritol-tetra(*β*-alkylthiopropionic acid)esters. These thioether-based antioxidants are added in an amount of preferably 0.001 to 10 parts by mass, more preferably 0.05 to 5 parts by mass, with respect to the total amount of 100 parts by mass of the polyolefin resin, thermoplastic elastomer and filler.

Examples of the ultraviolet absorbers include 2-hydroxybenzophenones such as 2,4-dihydroxybenzophenone, 2-hydroxy-4-methoxybenzophenone, 2-hydroxy-4-octoxybenzophenone and
5,5'-methylene-bis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-*tert*-butylphenyl)-5-chlorobenzotriazole, 2-(2'-hydroxy-3'-*tert*-butyl-5'-methylphenyl)-5-chlorobenzotriazole, 2-(2'-hydroxy-5'-*tert*-octylphenyl)benzotriazole, 2-(2'-hydroxy-3',5'-dicumylphenyl)benzotriazole, 2,2'-methylene-bis(4-*tert*-octyl-6-(benzotriazolyl)phenol) and 2-(2'-hydroxy-3'-*tert*-butyl-5'-carboxyphenyl)benzotriazole; benzoates such as phenyl salicylate, resorcinol monobenzoate,
2,4-di-*tert*-butylphenyl-3,5-di-*tert*-butyl-4-hydroxybenzoate, 2,4-di-*tert*-amylphenyl-3,5-di-*tert*-butyl-4-hydroxybenzoate and hexadecyl-3,5-di-*tert*-butyl-4-hydroxybenzoate; substituted oxanilides such as 2-ethyl-2'-ethoxyoxanilide and 2-ethoxy-4'-dodecyloxanilide; cyanoacrylates such as ethyl-*α*-cyano-*β*,*β*-diphenyl acrylate and
methyl-2-cyano-3-methyl-3-(*p*-methoxyphenyl)acrylate; and triaryl triazines such as 2-(2-hydroxy-4-octoxyphenyl)-4,6-bis(2,4-di-*tert*-butylphenyl)-*s*-triazine, 2-(2-hydroxy-4-methoxyphenyl)-4,6-diphenyl-*s*-triazine and 2-(2-hydroxy-4-propoxy-5-methylphenyl)-4,6-bis(2,4-di-*tert*-butylphenyl)-*s*-triazine. These ultraviolet absorbers are added in an amount of preferably 0.001 to 30 parts by mass, more preferably 0.05 to 10 parts by mass, with respect to the total amount of 100 parts by mass of the polyolefin resin, thermoplastic elastomer and filler.

Examples of the hindered amine-based light stabilizers include hindered amine compounds such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, bis(1-oxtoxy-2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)·di(tridecyl)-1,2,3,4-butanetetracarboxylate, bis(1,2,2,6,6-pentamethyl-4-piperidyl)·di(tridecyl)-1,2,3,4-butanetetracarboxylate, bis(1,2,2,4,4-pentamethyl-4-piperidyl)-2-butyl-2-(3,5-di-*tert*-butyl-4-hydroxybenzyl)malonate , 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-*s*-triazine polycondensate,
1,6-bis(2,2,6,6-tetramethyl-4-piperidylamino)hexane/2,4-dichloro-6-*tert*-octylamino-*s*-triazin e polycondensate,
1,5,8,12-tetrakis[2,4-bis(*N*-butyl-*N*-(2,2,6,6-tetramethyl-4-piperidyl)amino)-*s*-triazine-6-yl]-1, 5,8,12-tetraazadodecane,
1,5,8,12-tetrakis[2,4-bis(*N*-butyl-*N*-(1,2,2,6,6-pentamethyl-4-piperidyl)amino)-*s*-triazine-6-yl] -1,5,8,12-tetraazadodecane,
1,6,11-tris[2,4-bis(*N*-butyl-*N*-(2,2,6,6-tetramethyl-4-piperidyl)amino)-*s*-triazine-6-yl]aminoun decane and
1,6,11-tris[2,4-bis(*N*-butyl-*N*-(1,2,2,6,6-pentamethyl-4-piperidyl)amino)-*s*-triazine-6-yl]amino undecane. These hindered amine-based light stabilizers are added in an amount of preferably 0.001 to 30 parts by mass, more preferably 0.05 to 10 parts by mass, with respect to the total amount of 100 parts by mass of the polyolefin resin, thermoplastic elastomer and filler.

Further, in order to neutralize residual catalyst in the polyolefin resin, it is preferred to further add a known neutralizer as required. Examples of the neutralizer include fatty acid metal salts such as calcium stearate, lithium stearate and sodium stearate; and fatty acid amide compounds such as ethylene-bis(stearamide), ethylene-bis(12-hydroxystearamide) and stearic acid amide, and these neutralizers may be used in combination.

Further, to the polyolefin resin composition of the present invention, as required, for example, a nucleating agent (e.g., an aromatic metal carboxylate, an alicyclic metal alkylcarboxylate, aluminum *p*-*tert*-butylbenzoate, an aromatic metal phosphate or a kind of dibenzylidene sorbitol), a metallic soap, a hydrotalcite, a triazine ring-containing compound, a metal hydroxide, a phosphoric acid ester-based flame retardant, a condensed phosphoric acid ester-based flame retardant, a phosphate-based flame retardant, an inorganic phosphorus-based flame retardant, a (poly)phosphate-based flame retardant, a halogen-based flame retardant, a silicon-based flame retardant, an antimony oxide such as antimony trioxide, other inorganic flame retardant aid, other organic flame retardant aid, a filler, a pigment, a lubricant, and/or a foaming agent, may also be added.

Examples of the triazine ring-containing compounds include melamine, ammeline, benzoguanamine, acetoguanamine, phthalodiguanamine, melamine cyanurate, melamine pyrophosphate, butylene diguanamine, norbornene diguanamine, methylene diguanamine, ethylene dimelamine, trimethylene dimelamine, tetramethylene dimelamine, hexamethylene dimelamine and 1,3-hexylene dimelamine.

Examples of the metal hydroxides include magnesium hydroxide, aluminum hydroxide, calcium hydroxide, barium hydroxide, zinc hydroxide and KISUMA 5A (magnesium hydroxide, manufactured by Kyowa Chemical Industry Co., Ltd.).

Examples of the phosphate-based flame retardants include trimethyl phosphate, triethyl phosphate, tributyl phosphate, tributoxyethyl phosphate, trischloroethyl phosphate, trisdichloropropyl phosphate, triphenyl phosphate, tricresyl phosphate, cresyldiphenyl phosphate, trixylenyl phosphate, octyldiphenyl phosphate, xylenyldiphenyl phosphate, tris(isopropylphenyl) phosphate, 2-ethylhexyldiphenyl phosphate, *t*-butylphenyldiphenyl phosphate, bis(*t*-butylphenyl)phenyl phosphate, tris(*t*-butylphenyl)phosphate, isopropylphenyldiphenyl phosphate, bis(isopropylphenyl)diphenyl phosphate and tris(isopropylphenyl)phosphate.

Examples of the condensed phosphoric acid ester-based flame retardants include 1,3-phenylene-bis(diphenylphosphate), 1,3-phenylene-bis(dixylenylphosphate) and bisphenol A-bis(diphenylphosphate).

Examples of the (poly)phosphate-based flame retardants include ammonium salts and amine salts of (poly)phosphoric acid, such as ammonium polyphosphate, melamine polyphosphate, piperazine polyphosphate, melamine pyrophosphate and piperazine pyrophosphate.

Examples of the other inorganic flame retardant aids include inorganic compounds such as titanium oxide, aluminum oxide, magnesium oxide, hydrotalcites, talc and montmorillonite, and surface-treated products thereof. For example, a variety of commercially available products, such as TIPAQUE R-680 (titanium oxide: manufactured by Ishihara Sangyo Kaisha, Ltd.), KYOWAMAG 150 (magnesium oxide: manufactured by Kyowa Chemical Industry Co., Ltd.), DHT-4A (hydrotalcite: manufactured by Kyowa Chemical Industry Co., Ltd.) and ALCAMIZER 4 (zinc-modified hydrotalcite: manufactured by Kyowa Chemical Industry Co., Ltd.), can be used. Examples of the other organic flame retardant aids include pentaerythritol.

In addition, in the polyolefin resin composition of the present invention, as required, an additive(s) normally used in synthetic resins, for example, a cross-linking agent, an anti-fogging agent, an anti-plate-out agent, a surface treatment agent, a plasticizer, a lubricant, a flame retardant, a fluorescent agent, an antifungal agent, an antibacterial agent, a foaming agent, a metal inactivator, a mold-release agent, a pigment, a processing aid, an antioxidant and/or a light stabilizer, may also be incorporated in such a range that does not impair the effects of the present invention.

A resin molded article having antistaticity can be obtained by molding the polyolefin resin composition of the present invention. The molding method is not particularly restricted, and examples thereof include extrusion processing, calender processing, injection molding, rolling, compression molding, blow molding and rotational molding. Molded articles of various shapes, such as resin plates, sheets, films, bottles, fibers and special shape articles, can be produced by these methods. Such molded articles obtained from the polyolefin resin composition of the present invention exhibit excellent antistatic performance with excellent persistence. Further, the molded articles also have wiping resistance. Still further, the molded article also have intrinsic mechanical properties of the resin, such as bending modulus of elasticity, impact strength and thermal deformation temperature. Therefore, the molded article obtained by molding the polyolefin resin composition of the present invention is suitable for automotive interior and exterior materials.

The polyolefin resin composition of the present invention and molded articles thereof can be used in a wide range of industrial fields, including the fields of electricity/electronics/communication, agriculture/forestry/fisheries, mining, construction, foods, fibers, clothings, health care, coal, petroleum, rubbers, leathers, automobiles, precision instruments, wood materials, building materials, civil engineering, furnitures, printing and musical instruments.

More specific examples of applications where the polyolefin resin composition of the present invention and molded articles thereof can be used in office work automation equipments, such as printers, personal computers, word processors, keyboards, PDA (Personal Digital Assistant) devices, phones, copy machines, facsimiles, ECRs (electronic cash registers), electronic calculators, electronic organizers, cards, holders and stationeries; household electric appliances, such as laundry machines, refrigerators, vacuum cleaners, microwave ovens, lighting equipments, game machines, irons and kotatsu; audio and visual devices, such as televisions, video tape recorders, video cameras, radio-casette players, tape recorders, mini discs, CD players, speakers and liquid crystal displays; and electric/electronic components and communication devices, such as connectors, relays, capacitors, switches, printed circuit boards, coil bobbins, semiconductor sealing materials, LED sealing materials, electric wires, cables, transformers, deflection yokes, distribution boards and clocks; automobile interior and exterior materials; platemaking films; adhesive films; bottles; food containers; food packaging films; pharmaceutical and medical wrapping films; product packaging films; agricultural films; agricultural sheets; and greenhouse films.

Thereamong, the polyolefin resin composition of the present invention is particularly preferably used in automotive interior and exterior materials and automotive interior and exterior parts.

Examples of the automotive interior parts include instrument panels, door trim panels, pillar trims, door trim, pillar garnishes, package trays, rear trays and console boxes, and examples of the automotive exterior parts include bumpers, radiator grilles, front grilles, front panels, fenders, pillars, pillar covers, door mirror stay covers, glass run channels, door mirror housings, lamp housings, wheel covers, spoilers, air spoilers, weatherstrips, window moldings, belt moldings, sunroofs, front-end modules, door modules, back door modules and outer plates.

### EXAMPLES

The present invention will now be described concretely by way of examples thereof. It is noted here that, in the below-described examples and the like, "%" and "ppm" are all based on mass unless otherwise specified.

Polymer compounds (E) used in the present invention were produced in accordance with the below-described Production Examples. Further, in the Production Examples, the number-average molecular weight was determined by the below-described method of measuring the molecular weight.

### <Method of Measuring Molecular Weight>

The number-average molecular weight (hereinafter, referred to as "Mn") was measured by gel permeation chromatography (GPC). The conditions of the Mn measurement were as follows.
Apparatus: GPC apparatus, manufactured by JASCO Corporation
Solvent: tetrahydrofuran
Standard substance: polystyrene
Detector: differential refractometer (RI detector)
Column stationary phase: SHODEX KF-804L, manufactured by Showa Denko K.K.
Column temperature: 40°C
Sample concentration: 1 mg/1 mL
Flow rate: 0.8 mL/min
Injection volume: 100 µL

### [Production Example 1]

To a separable flask, 544 g of 1,4-cyclohexane dimethanol, 582 g (3.98 mol) of adipic acid, 0.7 g (0.01 mol) of phthalic anhydride and 0.5 g of an antioxidant (tetrakis[3-(3,5-di-*tert*-butyl-4-hydroxyphenyl)propionyloxymethyl]methane: ADK STAB AO-60, manufactured by ADEKA Corporation) were added, and these materials were allowed to polymerize for 4 hours under normal pressure with the temperature being slowly increased from 160°C to 210°C and then for 3 hours at 210°C under reduced pressure, whereby a polyester (A)-1 was obtained. This polyester (A)-1 had an acid value of 28 and a number-average molecular weight (Mn) of 5,400 in terms of polystyrene.

Next, 600 g of the thus obtained polyester (A)-1, 300 g of polyethylene glycol having a number-average molecular weight of 4,000 as a compound (B)-1 having hydroxyl groups at both ends, 0.5 g of an antioxidant (ADK STAB AO-60) and 0.8 g of zirconium octylate were added and allowed to polymerize at 210°C for 7 hours under reduced pressure, whereby a block polymer (C)-1 having a structure comprising carboxyl groups at both ends was obtained. This block polymer (C)-1 having a structure comprising carboxyl groups at both ends had an acid value of 9 and a number-average molecular weight (Mn) of 12,000 in terms of polystyrene.

To 300 g of the thus obtained block polymer (C)-1 having a structure comprising carboxyl groups at both ends, 5 g of bisphenol F diglycidyl ether was added as an epoxy compound (D)-1, and the resulting mixture was allowed to polymerize at 240°C for 3 hours under reduced pressure, whereby a polymer compounds (E)-1 according to the present invention was obtained.

### [Production Example 2]

To a separable flask, 591 g of an ethylene oxide adduct of bisphenol A, 235 g (1.16 mol) of sebacic acid, 8 g (0.05 mol) of isophthalic acid and 0.5 g of an antioxidant (ADK STAB AO-60) were added, and these materials were allowed to polymerize for 4 hours under normal pressure with the temperature being slowly increased from 160°C to 220°C. Then, 0.5 g of tetraisopropoxytitanate was added thereto and allowed to polymerize for 5 hours at 220°C under reduced pressure, whereby a polyester (A)-2 was obtained. This polyester (A)-2 had an acid value of 56 and a number-average molecular weight (Mn) of 2,300 in terms of polystyrene.

Next, 300 g of the thus obtained polyester (A)-2, 200 g of polyethylene glycol having a number-average molecular weight of 2,000 as a compound (B)-2 having hydroxyl groups at both ends, 0.5 g of an antioxidant (ADK STAB AO-60) and 0.5 g of zirconium acetate were added and allowed to polymerize at 220°C for 8 hours under reduced pressure, whereby a block polymer (C)-2 having a structure comprising carboxyl groups at both ends was obtained. This block polymer (C)-2 having a structure comprising carboxyl groups at both ends had an acid value of 11 and a number-average molecular weight (Mn) of 10,500 in terms of polystyrene.

To 300 g of the thus obtained block polymer (C)-2, 11 g of dicyclopentadiene methanol diglycidyl ether was added as an epoxy compound (D)-2, and these materials were allowed to polymerize at 240°C for 3 hours under reduced pressure, whereby a polymer compounds (E)-2 used in the present invention was obtained.

### [Production Example 3]

To a separable flask, 370 g of 1,4-bis(*β*-hydroxyethoxy)benzene, 289 g (1.98 mol) of adipic acid, 8 g (0.05 mol) of isophthalic acid, 300 g of polyethylene glycol having a number-average molecular weight of 4,000 as a compound (B)-1 having hydroxyl groups at both ends and 0.8 g of an antioxidant (ADK STAB AO-60) was added, and these materials were allowed to polymerize for 5 hours under normal pressure with the temperature being slowly increased from 180°C to 220°C. Then, 0.8 g of tetraisopropoxytitanate was added thereto and allowed to polymerize for 6 hours at 220°C under reduced pressure, whereby a block polymer (C)-3 having a structure comprising carboxyl groups at both ends was obtained. This block polymer (C)-3 having a structure comprising carboxyl groups at both ends had an acid value of 9 and a number-average molecular weight (Mn) of 11,800 in terms of polystyrene.

To 300 g of the thus obtained block polymer (C)-3 having a structure comprising carboxyl groups at both ends, 5 g of dicyclopentadiene methanol diglycidyl ether as an epoxy compound (D)-3 and 0.5 g of zirconium acetate were added, and these materials were allowed to polymerize at 240°C for 4 hours under reduced pressure, whereby a polymer compounds (E)-3 according to the present invention was obtained.

### [Examples 1 to 8 and Comparative Examples 1 to 4]

Using polyolefin resin compositions that were each blended based on the respective formulations (parts by mass) shown in Table 1 below, test pieces were obtained in accordance with the below-described test piece preparation conditions. For each of the thus obtained test pieces, the surface specific resistance (SR value) was measured and a test for evaluation of resistance to wiping with water was conducted as described below. Further, for each of the thus obtained test pieces, the bending modulus of elasticity, the charpy impact strength and the thermal deformation temperature were measured in accordance with the below-described conditions. In the same manner, the resin compositions of Comparative Examples were prepared in accordance with the respective formulations shown in Table 2 below and evaluated.

### <Conditions for Preparing Test Pieces>

Using a biaxial extruder manufactured by Ikegai Corp. (PCM30, equipped with a 60-mesh screen), polyolefin resin compositions that were blended based on the respective formulations shown in Tables 1 and 2 below were each granulated under the conditions of 200°C and 9 kg/hour to obtain pellets. Then, using a horizontal injection molding machine (NEX80, manufactured by Nissei Plastic Industrial Co., Ltd.), each of the thus obtained pellets was molded at a resin temperature of 200°C and a die temperature of 40°C to obtain a test piece for the test of surface specific resistance and resistance to wiping with water (100 mm × 100 mm × 3 mm) and a test piece for the measurement of bending modulus of elasticity, charpy impact strength and thermal deformation temperature (80 mm × 10 mm × 4 mm).

### <Method for Measuring Surface Specific Resistance (SR Value)>

The thus obtained test pieces were each molded and, immediately thereafter, stored under the conditions of a temperature of 25°C and a humidity of 60% RH. After 1 day and 30 days of storage, under the same atmosphere, the surface specific resistance (Ω/□) of each molded test piece was measured using an R8340 resistance meter manufactured by Advantest Corporation under the conditions of an applied voltage of 100 V and a voltage application time of 1 minute. The measurement was performed at five spots and an average thereof was determined.

### <Test for Evaluation of Resistance to Wiping with Water>

The surface of each of the thus obtained test pieces was wiped with a waste cloth 50 times in running water and subsequently stored for 24 hours under the conditions of a temperature of 25°C and a humidity of 60%. Thereafter, under the same atmosphere, the surface specific resistance (Ω/□) was measured using an R8340 resistance meter manufactured by Advantest Corporation under the conditions of an applied voltage of 100 V and a voltage application time of 1 minute. The measurement was performed at five spots and an average thereof was determined.

### <Bending Modulus of Elasticity>

The bending modulus of elasticity was measured in accordance with ISO178.

### <Charpy Impact Strength>

The Charpy impact strength was measured in accordance with ISO179-1 (with notch).

### <Thermal Deformation Temperature>

The Thermal deformation temperature was measured in accordance with ISO75-2.

**[Table 1]**

| | | Example | | | | | | | |
|---|---|---|---|---|---|---|---|---|---|
| | | 1 | 2 | 3 | 4 | 5 | 6 | 7 | 8 |
| Polyolefin resin^{*1} | | 70 | 70 | 70 | 70 | 70 | 70 | 70 | 70 |
| Thermoplastic elastomer^{*2} | | 20 | 20 | 20 | 20 | 20 | 20 | 20 | 20 |
| Filler^{*3} | | 10 | 10 | 10 | 10 | 10 | 10 | 10 | 10 |
| Polymer compound (E) | (E)-1 | 10 | 7.5 | 10 | 10 | 10 | 15 | | |
| | (E)-2 | | | | | | | 10 | |
| | (E)-3 | | | | | | | | 10 |
| Alkali metal salt | NaDBS^{*4} | | 0.3 | 0.5 | | | 0.8 | | |
| | LiOTs^{*5} | | | | 0.5 | | | | |
| | KOAc^{*6} | | | | | 0.5 | | 0.5 | 0.5 |
| Surface specific resistance (Q/□) | After 1 day | 5 × 10¹² | 9 × 10¹¹ | 1 × 10¹¹ | 8 × 10¹⁰ | 9 × 10¹⁰ | 1 × 10¹⁰ | 1 × 10¹¹ | 9 × 10¹⁰ |
| | After 30 days | 4 × 10¹² | 9 × 10¹¹ | 1 × 10¹¹ | 8 × 10¹⁰ | 9 × 10¹⁰ | 9 × 10⁹ | 1 × 10¹¹ | 9 × 10¹⁰ 101" |
| Evaluation test of resistance to wiping with water | | 4 × 10¹² | 9 × 10¹⁰ | 9 × 10¹⁰ | 8 × 10¹⁰ | 9 × 10¹⁰ | 9 × 10⁹ | 1 × 10¹¹ | 9 × 10¹⁰ |
| Bending modulus of elasticity (MPa) | | 2,120 | 2,130 | 2,150 | 2,150 | 2,150 | 2,100 | 2,120 | 2,140 |
| Charpy impact strength (J/m²) | | 10 | 11 | 11 | 12 | 11 | 12 | 11 | 11 |
| Thermal deformation temperature (°C) | | 110 | 111 | 108 | 108 | 110 | 104 | 110 | 108 |

| | | | | | | | | | |
|---|---|---|---|---|---|---|---|---|---|
| ^{*1}: impact copolymer polypropylene, manufactured by Japan Polypropylene Corporation: trade name: "BC03B" (melt flow rate = 30 g/10 min) ^{*2}: polyolefin-based thermoplastic elastomer, manufactured by The Dow Chemical Company, trade name: ENGAGE 8100 ^{*3}: fine powder talc, manufactured by Nippon Talc Co., Ltd. trade name: MICRO ACE P-4 ^{*4}: sodium dodecylbenzenesulfonate ^{*5}: lithium *p*-toluenesulfonate ^{*6}: potassium acetate | | | | | | | | | |

**[Table 2]**

| | | Comparative Example | | | |
|---|---|---|---|---|---|
| | | 1 | 2 | 3 | 4 |
| Polyolefin resin^{*1} | | 70 | 70 | 70 | 70 |
| Thermoplastic elastomer^{*2} | | 20 | 20 | 20 | 20 |
| Filler^{*3} | | 10 | 10 | 10 | 10 |
| Comparative antistatic agent-1^{*7} | | | 1 | 10 | |
| Comparative antistatic agent-2^{*8} | | | | | 10 |
| Surface specific resistance (Ω/□) | After 1 day | 4 × 10¹⁵ | 1 × 10¹² | 1 × 10¹¹ | 4 × 10¹⁴ |
| | After 30 days | 5 × 10¹⁵ | 2 × 10¹¹ | 1 × 10¹¹ | 3 × 10¹⁴ |
| Evaluation test of resistance to wiping with water | | 4 × 10¹⁵ | 2 × 10¹⁵ | 1 × 10¹⁵ | 3 × 10¹⁴ |
| Bending modulus of elasticity (MPa) | | 2,160 | 2,130 | 2,120 | 2,150 |
| Charpy impact strength (J/m²) | | 11 | 11 | 11 | 12 |
| Thermal deformation temperature (°C) | | 111 | 111 | 111 | 108 |

| | | | | | |
|---|---|---|---|---|---|
| ^{*1}: impact copolymer polypropylene, manufactured by Japan Polypropylene Corporation: trade name: "BC03B" (melt flow rate = 30 g/10 min) ^{*2}: polyolefin-based thermoplastic elastomer, manufactured by The Dow Chemical Company, trade name: ENGAGE 8100 ^{*3}: fine powder talc, manufactured by Nippon Talc Co., Ltd. trade name: MICRO ACE P-4 ^{*7}: glycerin monostearate ^{*8}: polyether ester amide-based antistatic agent, manufactured by BASF Japan Ltd.: trade name: "IRGASTAT P-22" | | | | | |

As shown in the above tables, the polyolefin resin compositions of Examples, in which a prescribed amount of an antistatic agent composed of a prescribed polymer compound (E) was blended with the polyolefin resin, thermoplastic elastomer and filler, were confirmed to have excellent antistatic properties with sufficient persistence and wiping resistance but without impairment of the resin intrinsic mechanical properties. On the other hand, in the olefin resin composition of Comparative Example 3 in which 10 parts by mass of glycerin monostearate was incorporated as an antistatic agent, glycerin monostearate bled out to the surface of the test piece, making the surface of the test piece sticky.

## Claims

1. A polyolefin resin composition comprising:
50 to 90 parts by mass of a polyolefin resin;
3 to 40 parts by mass of a thermoplastic elastomer; and
3 to 30 parts by mass of a filler (with a proviso that the total amount of said polyolefin resin, said thermoplastic elastomer and said filler is 100 parts by mass),
said polyolefin resin composition further comprising an antistatic agent composed of a polymer compound (E) in an amount of 3 to 20 parts by mass with respect to said total amount of 100 parts by mass of said polyolefin resin, said thermoplastic elastomer and said filler,
wherein said polymer compound (E) has a structure in which a diol, an aliphatic dicarboxylic acid, an aromatic dicarboxylic acid, a compound (B) which comprises at least one group represented by the following Formula (1) and has hydroxyl groups at both ends, and an epoxy compound (D) having two or more epoxy groups are bound via ester bonds:

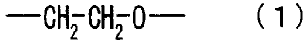

2. The polyolefin resin composition according to claim 1, wherein said polymer compound (E) has a structure in which a polyester (A), which is constituted by a diol, an aliphatic dicarboxylic acid and an aromatic dicarboxylic acid, said compound (B) and said epoxy compound (D) are bound via ester bonds.

3. The polyolefin resin composition according to claim 2, wherein said polymer compound (E) has a structure in which a block polymer (C) having carboxyl groups at both ends and said epoxy compound (D) are bound via an ester bond, said block polymer (C) comprising a block constituted by said polyester (A) and a block constituted by said compound (B) that are repeatedly and alternately bound via ester bonds.

4. The polyolefin resin composition according to claim 2, wherein said polyester (A) constituting said polymer compound (E) has a structure comprising carboxyl groups at both ends.

5. The polyolefin resin composition according to claim 3, wherein, in said polymer compound (E), said block constituted by said polyester (A) has a number-average molecular weight of 800 to 8,000 in terms of polystyrene, said block constituted by said compound (B) has a number-average molecular weight of 400 to 6,000 in terms of polystyrene, and said block polymer (C) has a number-average molecular weight of 5,000 to 25,000 in terms of polystyrene.

6. The polyolefin resin composition according to claim 1, wherein said compound (B) constituting said polymer compound (E) is a polyethylene glycol.

7. The polyolefin resin composition according to claim 1, further comprising at least one selected from the group consisting of alkali metal salts and Group II element salts in an amount of 0.1 to 15 parts by mass with respect to said total amount of 100 parts by mass of said polyolefin resin, said thermoplastic elastomer and said filler.

8. The polyolefin resin composition according to claim 1, wherein said polyolefin resin has a melt flow rate in a range of 5 to 100 g/10 min.

9. An automotive interior/exterior material obtained by molding the polyolefin resin composition according to claim 1.
